(19) Europäisches Patentamt
European Patent Office
Office européen des brevets

(11) **EP 4 501 129 A1**

(12) **EUROPEAN PATENT APPLICATION**
published in accordance with Art. 153(4) EPC

(43) Date of publication:
**05.02.2025 Bulletin 2025/06**

(21) Application number: 23781026.2

(22) Date of filing: **30.03.2023**

(51) International Patent Classification (IPC):
*A23J 3/06* (2006.01)    *B01D 61/14* (2006.01)
*B01D 61/18* (2006.01)    *B01D 61/22* (2006.01)
*B01D 63/02* (2006.01)    *B01D 69/00* (2006.01)
*B01D 69/02* (2006.01)    *C08H 1/00* (2006.01)

(52) Cooperative Patent Classification (CPC):
A23J 3/06; B01D 61/14; B01D 61/18; B01D 61/22;
B01D 63/02; B01D 69/00; B01D 69/02; C08H 1/00

(86) International application number:
**PCT/JP2023/013447**

(87) International publication number:
**WO 2023/191018 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057099**

(71) Applicant: **Toray Industries, Inc.
Tokyo 103-8666 (JP)**

(72) Inventors:
• **KOZAKI Yoichiro**
  **Otsu-shi, Shiga 520-8558 (JP)**
• **KOBAYASHI Kentaro**
  **Otsu-shi, Shiga 520-8558 (JP)**
• **KANAMORI Satoko**
  **Otsu-shi, Shiga 520-8558 (JP)**

(74) Representative: **Hoefer & Partner Patentanwälte
mbB
Pilgersheimer Straße 20
81543 München (DE)**

(54) **METHOD FOR PRODUCING GELATIN OR CONCENTRATED GELATIN SOLUTION**

(57)    The present invention relates to a method for producing a gelatin or a concentrated gelatin solution, said method comprising a membrane concentration step for concentrating a gelatin solution with an ultrafiltration membrane module provided with an ultrafiltration membrane, and a heat concentration step for further concentrating the gelatin solution with heat after the membrane concentration step. In the membrane concentration step, operation is started such that the flow rate ratio ($v_p/v_f$) of the flow rate $v_p$ of the filtrate and the flow rate $v_f$ of the gelatin solution is 0.020-0.15 when the ratio ($\mu_r/\mu_p$) of viscosity $\mu_f$ of the gelatin solution and the viscosity $\mu_p$ of the filtrate is greater than or equal to 1.5.

**FIG. 1**

## Description

TECHNICAL FIELD

The present invention relates to a method for producing gelatin or a concentrated gelatin solution.

BACKGROUND ART

Known methods for producing dried gelatin, which is a raw material for gelatin products, are hot drying such as drum drying and spray drying, and cold drying, which involves air drying at a relatively low temperature, and in the related art, in order to improve drying efficiency, an operation of concentrating a gelatin solution to a predetermined concentration is carried out before the drying process.

In the related art, thermal concentration techniques such as a thin-film vacuum concentration method is widely used as a concentration technique, and as other concentration techniques, a membrane concentration technique in which water in a gelatin solution is filtrated using an ultrafiltration membrane to concentrate a gelatin component is disclosed in Patent Literatures 1 to 3.

CITATION LIST

PATENT LITERATURE

Patent Literature 1: JPH11-140420A
Patent Literature 2: JP2014-100110A
Patent Literature 3: JP2021-516685A

SUMMARY OF INVENTION

TECHNICAL PROBLEM

In the related art, the thermal concentration technique requires a huge amount of energy for evaporation, and although the membrane concentration technique which consumes relatively little energy is known, it is difficult to highly concentrate a solution to a predetermined concentration to obtain a sufficient effect of improving drying efficiency.

In view of the above-mentioned current situation, an object of the present invention is to provide an energy-saving method for producing gelatin or a concentrated gelatin solution.

SOLUTION TO PROBLEM

In order to achieve the above object, the present inventors discovered that a synergistic effect can be obtained by appropriately combining a plurality of concentration steps, thereby solving the above problem, and thus completed the present invention.

That is, the present invention provides the following method for producing gelatin or a concentrated gelatin solution.

[1] A method for producing gelatin or a concentrated gelatin solution, the method including:

a membrane concentration step in which a gelatin solution is concentrated by an ultrafiltration membrane module including an ultrafiltration membrane; and
a thermal concentration step in which the gelatin solution is further concentrated by heat after the membrane concentration step, in which
the membrane concentration step is started such that a ratio ($\mu_f/\mu_p$) of a viscosity $\mu_f$ of the gelatin solution to a viscosity $\mu_p$ of a filtrate is 1.5 or more and a flow rate ratio ($v_p/v_f$) of a flow rate $v_f$ of the gelatin solution to a flow rate $v_p$ of the filtrate is 0.020 or more and 0.15 or less.

[2] The method for producing gelatin or a concentrated gelatin solution according to [1], in which
the viscosity $\mu_f$ of the gelatin solution to be concentrated by the membrane concentration step is 2.0 mPa·s or more.
[3] The method for producing gelatin or a concentrated gelatin solution according to [1] or [2], in which

the membrane concentration step is carried out so that the viscosity $\mu_f$ of the gelatin solution and the flow rate $v_f$ of the gelatin solution satisfy a relation of $v_f < -0.135\mu_f + 3.0$.

[4] The method for producing gelatin or a concentrated gelatin solution according to any one of [1] to [3], in which in the membrane concentration step, a membrane area per unit volume of the ultrafiltration membrane module is 800 $m^2/m^3$ or more and 3700 $m^2/m^3$ or less.

[5] The method for producing gelatin or a concentrated gelatin solution according to any one of [1] to [4], in which

in the membrane concentration step, a ratio ($V_f/A$) of a flow rate $V_f$ of the gelatin solution per one ultrafiltration membrane module to an effective membrane area A per one ultrafiltration membrane module is 0.5 m/h or more and 3.5 m/h or less,
provided that, when a plurality of ultrafiltration membrane modules are arranged in series, all the ultrafiltration membrane modules arranged in series are considered to be one unit.

[6] The method for producing gelatin or a concentrated gelatin solution according to any one of [1] to [5], in which

in the membrane concentration step, a ratio ($V_f/V$) of the flow rate $V_f$ of the gelatin solution per one ultrafiltration membrane module to a volume V of one ultrafiltration membrane module is 600/h or more and 4000/h or less,
provided that, when a plurality of ultrafiltration membrane modules are arranged in series, all the ultrafiltration membrane modules arranged in series are considered to be one unit.

[7] The method for producing gelatin or a concentrated gelatin solution according to any one of [1] to [6], in which a blocking rate R of the ultrafiltration membrane for dextran having a weight average molecular weight of 40000 is 40% or more and 80% or less.

[8] The method for producing gelatin or a concentrated gelatin solution according to any one of [1] to [7], in which a surface free energy $\gamma$ of the ultrafiltration membrane is 10 $mJ/m^2$ or more and 40 $mJ/m^2$ or less.

[9] The method for producing gelatin or a concentrated gelatin solution according to any one of [1] to [8], in which

a van der Waals component $\gamma_{LW}$ of the surface free energy $\gamma$ of the ultrafiltration membrane is 10 $mJ/m^2$ or more and 40 $mJ/m^2$ or less, and
an electron-donor component $\gamma$- of the surface free energy $\gamma$ of the ultrafiltration membrane is 25 $mJ/m^2$ or more and 40 $mJ/m^2$ or less.

[10] The method for producing gelatin or a concentrated gelatin solution according to any one of [1] to [9], in which

a surface potential $\Psi$ of the ultrafiltration membrane is -20 mV or more and -5 mV or less,
provided that, the surface potential $\Psi$ is measured at room temperature in a buffer solution of pH 7.

[11] The method for producing gelatin or a concentrated gelatin solution according to any one of [1] to [10], in which the ultrafiltration membrane includes a thermoplastic resin including a polyvinylidene fluoride resin.

[12] The method for producing gelatin or a concentrated gelatin solution according to any one of [1] to [11], in which in a surface of the ultrafiltration membrane that comes into contact with the gelatin solution, a value X obtained by dividing the number of surface pores per unit surface area by an average value of surface pore diameters is 5 pores/$\mu m^2$/nm to 100 pores/$\mu m^2$/nm.

[13] The method for producing gelatin or a concentrated gelatin solution according to any one of [1] to [12], in which

the ultrafiltration membrane has elliptical openings in a surface that comes into contact with the gelatin solution,
an average value of a ratio (d1/d2) of a major axis d1 to a minor axis d2 of each of the openings is 1.1 or more and 1.4 or less,
a standard deviation of the ratio (d1/d2) is 0.3 or less, and
an average value $d2_{ave}$ of the minor axis is 5 nm or more and 15 nm or less.

[14] The method for producing gelatin or a concentrated gelatin solution according to any one of [1] to [13], in which in the ultrafiltration membrane module, an effective membrane length in a flowing direction of the gelatin solution is 0.50 m or more and 2.00 m or less.

[15] The method for producing gelatin or a concentrated gelatin solution according to any one of [1] to [14], in which the ultrafiltration membrane module is an external-pressure type membrane module including a hollow fiber membrane as the ultrafiltration membrane.

[16] The method for producing gelatin or a concentrated gelatin solution according to [15], in which

a membrane filling rate in the external-pressure type membrane module is 20% or more and 50% or less.

[17] The method for producing gelatin or a concentrated gelatin solution according to [15] or [16], in which a load at breaking of the hollow fiber membrane is 500 gf/membrane or more.

[18] The method for producing gelatin or a concentrated gelatin solution according to any one of [15] to [17], in which an inner diameter of the hollow fiber membrane is 300 μm or more and 1000 μm or less.

ADVANTAGEOUS EFFECTS OF INVENTION

According to the production method of the present invention, gelatin or a concentrated gelatin solution can be produced in an energy-saving manner.

BRIEF DESCRIPTION OF DRAWINGS

FIG. 1 is an example (process schematic diagram) of a method for producing gelatin according to one embodiment of the present invention.

FIG. 2 is a schematic cross-sectional view of an ultrafiltration membrane module according to one embodiment of the present invention.

FIG. 3 is a schematic flow diagram showing one embodiment of an operating device to which the ultrafiltration membrane module of the present invention is applied.

FIG. 4 is a schematic diagram showing a method for measuring a viscosity of a gelatin solution.

DESCRIPTION OF EMBODIMENTS

Hereinafter, an embodiment of the present invention will be described in detail, but the present invention is not limited thereto in any way.

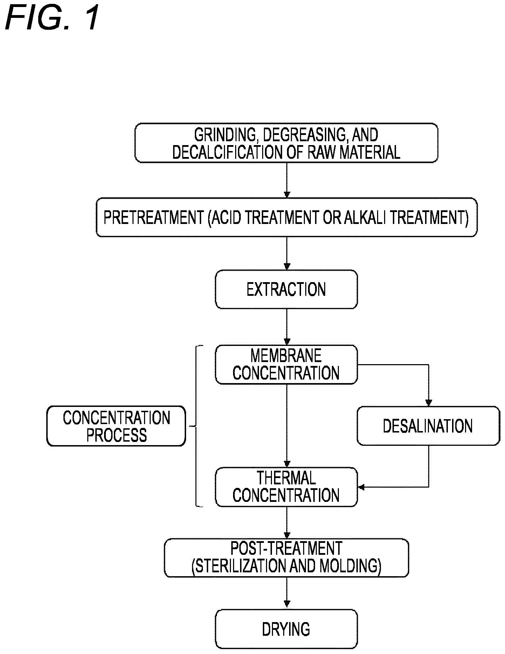

FIG. 1 is an example (process schematic diagram) of a method for producing gelatin or a concentrated gelatin solution according to one embodiment of the present invention.

As shown in FIG. 1, in the method for producing gelatin or a concentrated gelatin solution according to one embodiment of the present invention, for example, grinding, degreasing, decalcification, pretreatment (acid treatment or alkali treatment), and extraction of raw materials are performed to produce a gelatin solution. The obtained gelatin solution is subjected to a concentration process including a membrane concentration step and a thermal concentration step carried out in this order, to obtain a concentrated gelatin solution. The concentrated gelatin solution is subjected to, for example, a post-treatment (sterilization and molding) and drying to obtain gelatin.

Note that in the production method according to the present embodiment, it is essential that the membrane concentration step and the thermal concentration step are carried out in this order, and the other steps are steps that are arbitrary carried out.

Each of the above steps will now be described in detail.

<Method for Producing Gelatin Solution>

Although a method for producing the gelatin solution to be subjected to the membrane concentration step according to the present embodiment is not particularly limited, for example, the raw material is degreased and decalcified, then washed with water, pretreated with an acid or alkali, washed with water again, and then gelatin is extracted to obtain the gelatin solution.

Typical raw materials for gelatin include bone raw materials such as cow bones and pig bones, leather raw materials such as cowhide and pig skin, and fish raw materials such as shark, all of which have a collagen-containing tissue. Especially, when using bone materials such as cow bones and pig bones as the raw material, it is preferable to crush the raw material.

Gelatin extraction may be carried out in a batch type, and the number of extraction is not particularly limited. Specifically, about 1 to 8 times is sufficient, but generally, 3 to 7 times is preferable.

A gelatin concentration of the gelatin solution according to the present embodiment is not particularly limited, but is preferably 1 mass% or more and less than 10 mass% during the extraction. When the gelatin concentration is 1 mass% or more and less than 10 mass%, it is possible to prevent gelatin from being decomposed more than necessary during extraction, and further to ensure a sufficient jelly strength of the extracted gelatin.

<Gelatin Solution Concentration Process>

The method for producing gelatin or a concentrated gelatin solution according to the present embodiment includes a membrane concentration step of concentrating the gelatin solution using an ultrafiltration membrane module having an ultrafiltration membrane, and a thermal concentration step of further concentrating the gelatin solution by heat after the membrane concentration step.

When low molecular weight components in the gelatin solution are removed in the membrane concentration step, a molar concentration of the gelatin solution decreases, thereby preventing a boiling point rise caused by a solute, and reducing energy required for evaporation in the thermal concentration step. Therefore, the gelatin solution can be concentrated in an energy-saving manner. Therefore, in the present embodiment, the thermal concentration step is carried out after the membrane concentration step.

For the reasons mentioned above, the effects of the present invention cannot be obtained by carrying out the membrane concentration step after the thermal concentration step, or by carrying out only concentration and dehydration steps other than the thermal concentration step, such as an alcohol precipitation step, after the membrane concentration step. However, other concentration and dehydration steps may be added between the membrane concentration step and the thermal concentration step. Furthermore, an ion exchange step may be performed before or after the concentration process to desalt the gelatin solution and control a salt concentration in the gelatin solution within a predetermined range. In order to reduce a load of the ion exchange step, the desalination by the ion exchange step is preferably performed after the membrane concentration step by which low molecular weight ion components are removed, as shown in FIG. 1.

(1) Membrane Concentration of Gelatin Solution

The membrane concentration step according to the present embodiment is a step of concentrating the gelatin solution by an ultrafiltration membrane module provided with an ultrafiltration membrane. The low molecular weight components are removed from the gelatin solution by the membrane concentration step.

(1.1) Ultrafiltration Membrane

Fractionation performance of the ultrafiltration membrane used in the ultrafiltration membrane module is not particularly limited as long as at least a part of gelatin in the gelatin solution can be rejected, but it is preferable that a blocking rate R of dextran having a weight average molecular weight of 40000 is 40% or more and 80% or less. When the blocking rate R of the ultrafiltration membrane is 40% or more, the amount of gelatin passing through the membrane is not too large, and concentration efficiency is improved. When the blocking rate R is 80% or less, sufficient water permeability can be obtained. The blocking rate R is more preferably 45% or more, and further preferably 50% or more.

Here, the blocking rate R is determined by a ratio of a refractive index of an aqueous dextran solution before and after passing through the membrane. Specifically, an aqueous dextran solution prepared to have a temperature of 25°C and contain 1000 ppm of commercially available dextran with a weight average molecular weight of 40,000 Da is filtrated through the membrane at a cross-flow linear velocity of 1.0 m/sec and a transmembrane differential pressure of 10 kPa, and the blocking rate R can be calculated using the following equation.

R = {(refractive index of feed) - (refractive index of permeated liquid)}/{(refractive index of feed) - (refractive index of pure water)}

Here, the cross-flow linear velocity is a value obtained by dividing a flow rate of the feed to be filtrated in a direction perpendicular to a filtration direction by a cross-sectional area of a flow path of the flow. The transmembrane differential pressure is a difference in pressure between the feed side and the permeated liquid side across the membrane.

A surface free energy $\gamma$ of the ultrafiltration membrane is preferably 10 mJ/m$^2$ or more and 40 mJ/m$^2$ or less. When the surface free energy $\gamma$ of the ultrafiltration membrane is within the above range, the surface of the ultrafiltration membrane becomes relatively difficult to wet with water, so that a hydration structure of a solute component in the gelatin solution is less likely to be disturbed near the surface of the ultrafiltration membrane, and is easy to detach when attached to the surface of the ultrafiltration membrane.

It is preferable that a van der Waals component $\gamma_{LW}$ of the surface free energy $\gamma$ of the ultrafiltration membrane is 10 mJ/m$^2$ or more and 40 mJ/m$^2$ or less, and that an electron-donor component $\gamma$- of the surface free energy $\gamma$ of the ultrafiltration membrane is 25 mJ/m$^2$ or more and 40 mJ/m$^2$ or less. When the van der Waals component $\gamma_{LW}$ and the electron-donor component $\gamma$- of the surface free energy $\gamma$ are in the above ranges, an attractive force generated between the solute component in the gelatin solution and the surface of the ultrafiltration membrane is reduced, and adhesion to the surface of the ultrafiltration membrane can be prevented.

Here, the surface free energy $\gamma$ and the van der Waals component $\gamma_{LW}$ and the electron-donor component $\gamma$- can be determined by contact angle measurements using a solvent with known components of the surface free energy. Specifically, a membrane sample is fixed to a three-state sample stage with a three-state magnet such that a membrane surface side to be measured faces downward, and is then placed in a three-state cell containing distilled water. Then, approximately 22 $\mu$L of air bubble is generated on the surface, and a static contact angle is measured with a contact angle meter (for example, DropMaster DM500, Kyowa Interface Science Co., Ltd). The measurement is carried out three or more times, and an average value is taken as the measured value. A sample is also fixed to a three-state sample stage with a three-state magnet such that a membrane surface side to be measured faces upward, and is then placed in a three-state cell containing distilled water, and approximately 22 $\mu$L of diiodomethane or formamide is dropped onto the surface, and a static contact angle is measured using a contact angle meter.

The components of the surface free energy of the membrane can be determined by using surface free energy component data of each solvent built into the contact angle meter and a calculation formula.

In the present embodiment, a surface potential $\Psi$ of the ultrafiltration membrane is preferably -20 mV or more and -5 mV or less. When the surface potential $\Psi$ is within the above range, a repulsive force generated between the solute component in the gelatin solution and the surface of the ultrafiltration membrane becomes large, making it possible to prevent adhesion to the surface of the ultrafiltration membrane.

Note that the surface potential $\Psi$ is a value measured in a buffer solution of pH 7 at room temperature.

A raw material of the ultrafiltration membrane is not particularly limited, but examples thereof include thermoplastic resins. Examples of thermoplastic resins include single components such as polyesters such as polytetrafluoroethylene, polyvinylidene difluoride, polylactic acid, polyhydroxyacetic acid, polycaprolactone, and polyethylene adipate, polyurethanes, poly(meth)acrylic acid esters, polyvinyl acetals, polyamides, polystyrenes, polysulfones, cellulose derivatives, polyphenylene ethers, and polycarbonates, polymer alloys or blends of two or more selected from the above, and copolymers of monomers that form the above polymers, but are not limited to the above examples.

Among these, examples of resin components having excellent heat resistance, chemical resistance, and the like include fluorine-based resins such as polytetrafluoroethylene and polyvinylidene difluoride, and sulfone-based resins such as polysulfone and polyethersulfone. Among these, polyvinylidene fluoride resin is particularly preferred since polyvinylidene fluoride has high compatibility with a solvent and allows a uniform production feed to be easily prepared. That is, the ultrafiltration membrane preferably includes a thermoplastic resin containing a polyvinylidene fluoride resin.

The polyvinylidene fluoride resin means a resin containing at least one of a vinylidene fluoride homopolymer and a vinylidene fluoride copolymer. The polyvinylidene fluoride resin may contain a plurality of types of vinylidene fluoride copolymers.

A weight average molecular weight of the polyvinylidene fluoride resin may be appropriately selected depending on the required strength and water permeability of the ultrafiltration membrane, but if the weight average molecular weight is too large, the water permeability may decrease, and if the weight average molecular weight is too small, the strength may decrease. For this reason, the weight average molecular weight is preferably 100,000 or more and 700,000 or less. Note that the weight average molecular weight may be a value measured by a standard method, for example, a value measured in terms of polystyrene by gel permeation chromatography (GPC).

The vinylidene fluoride copolymer is a polymer having a vinylidene fluoride residue structure, and is typically a copolymer of a vinylidene fluoride monomer and other fluorine-based monomer or the like. Examples of such copolymers include copolymers of vinylidene fluoride and one or more monomers selected from vinyl fluoride, tetrafluoroethylene, hexafluoropropylene, and trifluorochloroethylene.

A surface pore diameter and the number of pores on the surface of the ultrafiltration membrane that comes into contact with the gelatin solution are not particularly limited, but a value X obtained by dividing the number of surface pores per unit surface area (pores/$\mu$m$^2$) by the surface pore diameter (nm) is preferably 5 pores/$\mu$m$^2$/nm to 100 pores/$\mu$m$^2$/nm.

The ultrafiltration membrane is preferably obtained by a phase separation method as described below, but in the phase separation method, there is generally a trade-off relation between the surface pore diameter and the number of pores. However, a small pore diameter of the ultrafiltration membrane prevents coarse contaminant components and objects to be removed in the feed from penetrating into the porous membrane, and a large number of pores makes it possible to ensure a sufficient number of flow paths for the feed to pass through the ultrafiltration membrane and to disperse the contaminant components. That is, by achieving both a small surface pore diameter and a large number of surface pores, dirt resistance can be improved. Therefore, it is preferable that the number of surface pores and the surface pore diameter both satisfy a favorable positive correlation and that the X value taking both into consideration is used as an index of the dirt resistance. Since the number of surface pores is negatively correlated with the surface pore diameter, it is preferable to use the X value divided by the surface pore diameter as the index rather than using only the number of surface pores as the index.

Therefore, in the ultrafiltration membrane of the present embodiment, the value X obtained by dividing the number of surface pores per unit surface area by an average value of the surface pore diameter is preferably 5 pores/$\mu$m$^2$/nm or more and 100 pores/$\mu$m$^2$/nm or less, and more preferably 5 pores/$\mu$m$^2$/nm or more and 50 por-

es/$\mu$m$^2$/nm or less, and still more preferably 5 pores/$\mu$m$^2$/nm or more and 20 pores/$\mu$m$^2$/nm or less.

It is preferable that the ultrafiltration membrane has approximately elliptical openings in the surface that comes into contact with the gelatin solution, and an average value of a ratio (d1/d2) of a major axis d1 to a minor axis d2 of each of the openings is 1.1 or more and 1.4 or less, and a standard deviation of the ratio (d1/d2) is 0.3 or less, and an average value d2$_{ave}$ of the minor axis is 5 nm or more and 15 nm or less. When d1/d2 and d2$_{ave}$ fall within the above ranges, the surface can effectively block gelatin while exhibiting high water permeability.

Note that in the present specification, the term "approximately elliptical" means that a cross section perpendicular to an axial direction of the ultrafiltration membrane has a flattened shape, and is not limited to a geometric ellipse.

In the present embodiment, the shape of the ultrafiltration membrane is not particularly limited, but a hollow fiber shape, that is, a hollow fiber membrane, which has a relatively large membrane area per unit installation area, is preferably adopted. Note that in the present specification, the term "membrane area" refers to a surface area of the ultrafiltration membrane at a portion where it is used for separation.

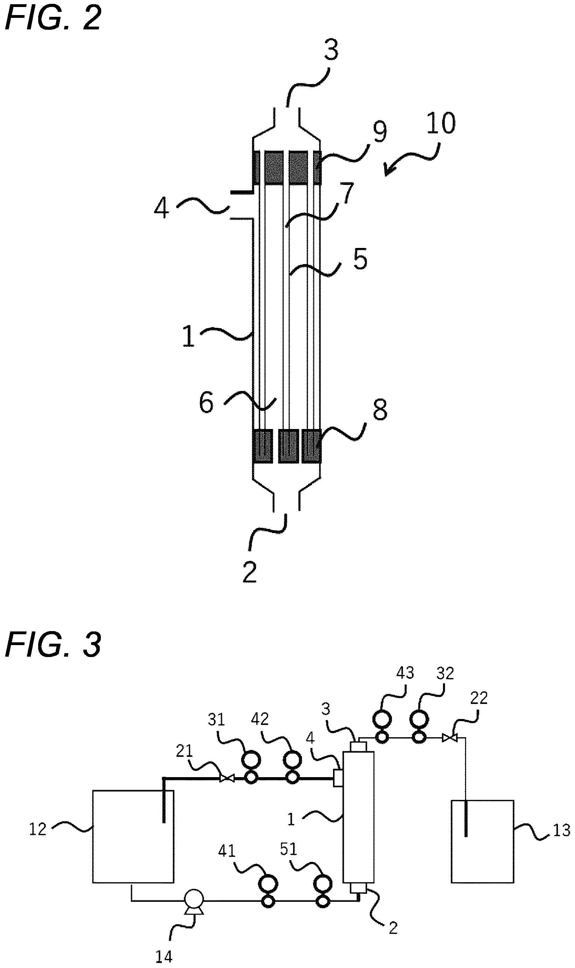

When the ultrafiltration membrane is a hollow fiber membrane, a load at breaking of the hollow fiber membrane is preferably 500 gf/membrane or more. In external-pressure type cross-flow filtration, as shown in FIG. 2 as an example, the feed, that is, the gelatin solution, is introduced into an ultrafiltration membrane module 10 through a feed inlet 2 of the ultrafiltration membrane module 10, and then discharged from a feed outlet 4, and when the gelatin solution is discharged from the feed outlet 4, the flow of the gelatin solution is turned 90°. Therefore, a shearing force perpendicular to a length direction of an ultrafiltration membrane 5 is applied to the ultrafiltration membrane (hollow fiber membrane) 5 in the vicinity of the feed outlet 4. When the load at breaking of the ultrafiltration membrane 5 is 500 gf/membrane or more, fiber breakage and membrane damage caused by shearing due to the flow generated during cross-flow filtration operation can be prevented.

The load at breaking refers to a load (gf) applied when the hollow fiber membrane is stretched in an axial direction by a tensile tester or the like and breaks. The measuring temperature at this time is the temperature of the feed during actual operation. The load at breaking of the hollow fiber membrane is more preferably 600 gf/membrane or more, and still more preferably 700 gf/membrane or more.

A method for measuring the load at breaking is not particularly limited, and for example, the strength can be measured by stretching a sample with a measurement length of 50 mm at a stretching speed of 50 mm/min using a tensile tester that can control an ambient temperature, and then repeating at least 5 times with different samples to obtain an average value of breaking strength.

Furthermore, when the ultrafiltration membrane is a hollow fiber membrane, an inner diameter of the hollow fiber membrane is preferably 300 $\mu$m or more and 1000 $\mu$m or less. When the inner diameter of the hollow fiber membrane is 300 $\mu$m or more, passing resistance of the permeated liquid or the feed when passing through a hollow portion can be reduced. When the inner diameter is 1000 $\mu$m or less, an effective membrane area A can be sufficiently ensured when being packed into a module having a certain volume. Here, the effective membrane area A of the module refers to an area of the surface of the membrane that comes into contact with the raw gelatin solution. The inner diameter of the hollow fiber membrane is more preferably 850 $\mu$m or less, and still more preferably 750 $\mu$m or less.

Examples of a structure of the ultrafiltration membrane include a symmetric membrane with a uniform pore diameter throughout, an asymmetric membrane with a pore diameter that varies in a thickness direction of the membrane, and a composite membrane including a support membrane to maintain strength and a functional layer to separate a target substance.

(1.2) Method for Producing Ultrafiltration Membrane

A method for producing the ultrafiltration membrane is not particularly limited, but as an example, a method for obtaining an ultrafiltration membrane, which is a hollow fiber membrane, from a polyvinylidene fluoride resin will be described.

Examples of the method for producing an ultrafiltration membrane from a polyvinylidene fluoride resin include thermal-induced phase separation method, non-solvent-induced phase separation method, melt extraction method, and stretching and opening method, among which the thermally-induced phase separation method or the non-solvent-induced phase separation method is preferably used.

The thermal-induced phase separation method is a phase separation method in which a resin solution dissolved at a high temperature is solidified by cooling, and the non-solvent-induced phase separation method is a phase separation method in which a resin solution is solidified by being brought into contact with a non-solvent, and in both cases, the opening diameter of the membrane can be controlled to a size suitable for the membrane concentration step of the gelatin solution by controlling a phase separation speed.

Other layers may be formed simultaneously or sequentially on an ultrafiltration membrane made of a polyvinylidene fluoride resin obtained by utilizing the thermal-induced phase separation method or the non-solvent-induced phase separation method to form a composite ultrafiltration membrane. Examples of a method for simultaneous formation include a method of composite molding of a plurality of resin solutions using a multi-tube spinneret. Examples of a method for sequential formation include a method in which a resin solution for forming another layer is applied to the ultrafiltration membrane obtained after the above step, and then the membrane is scraped by a nozzle or a slit coater, and a method in which a resin solution for forming another layer is spray-coated. Between the two methods, the method of applying a resin solution for forming another layer, and then scraping and solidifying the membrane is simple and preferable.

In the production of a composite ultrafiltration membrane by the above-mentioned method, the components and structure of the resin forming the another layer are not particularly limited, but when the purpose is to modify or densify the surface of the ultrafiltration membrane, a three-dimensional network structure is preferably used.

To form a three-dimensional network structure, the non-solvent-induced phase separation method can be used. When the non-solvent-induced phase separation method is used, a good solvent or a poor solvent for the resin can be used as the solvent for the resin solution, and the good solvent is preferably used. As the good solvent, examples of a good solvent for the polyvinylidene fluoride resin include lower alkyl ketones such as N-methyl-2-pyrrolidone, dimethyl acetamide, dimethyl formamide, methyl ethyl ketone, acetone, and tetrahydrofuran, esters, amides, and a mixed solvent thereof. Here, the good solvent refers to a solvent capable of dissolving the polyvinylidene fluoride resin to 5 mass% or more even at a low temperature of less than 60°C.

Here, examples of the poor solvent include cyclohexanone, isophorone, γ-butyrolactone, methyl isoamyl ketone, propylene carbonate, dimethyl sulfoxide, and a mixed solvent thereof. The "poor solvent" means a solvent not capable of dissolving the polyvinylidene fluoride resin to 5 mass% or more at a low temperature of less than 60°C but capable of dissolving the polyvinylidene fluoride resin to 5 mass% or more in a high-temperature region of 60°C or more and a melting point of the polyvinylidene fluoride resin or less.

A non-solvent with which the resin solution comes into contact is defined as a solvent that does not dissolve or swell the polyvinylidene fluoride resin until the temperature reaches a melting point of the polyvinylidene fluoride resin or a boiling point of the solvent. Here, examples of the non-solvent for the polyvinylidene fluoride resin include water, aliphatic hydrocarbons such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and low molecular weight polyethylene glycol, aromatic hydrocarbons, aliphatic polyhydric alcohols, aromatic polyhydric alcohols, chlorinated hydrocarbons, and other chlorinated organic liquids and mixed solvents thereof.

(1.3) Ultrafiltration Membrane Module

The membrane concentration step according to the present embodiment is carried out using an ultrafiltration membrane module (hereinafter, sometimes referred to as a "membrane module") provided with an ultrafiltration membrane, and in particular, it is preferable to use an external-pressure type membrane module provided with a hollow fiber membrane (hereinafter, sometimes referred to as an "external-pressure type membrane module") as the ultrafiltration membrane.

When using an internal-pressure type membrane module to carry out the membrane concentration step by cross-flow filtration, which will be described below, on a feed with high turbidity and viscosity such as a gelatin solution, since the internal-pressure type membrane module has a smaller flow path size for the feed as compared with the external-pressure type membrane module, the flow path may be blocked or a pressure loss due to the flow of the feed may increase. As a countermeasure, it becomes necessary to increase the inner diameter of the hollow fiber membrane, which may result in a decrease in the membrane area of the membrane module and a decrease in the filtrate flow amount of the membrane module. Therefore, in the membrane concentration step according to the present embodiment, it is preferable to use an external-pressure type membrane module.

Here, the "external-pressure type" refers to a method in which the feed is supplied to the outside of the ultrafiltration membrane, which is a hollow fiber membrane, and filtration is performed from the outside to the inside (the hollow portion side) of the ultrafiltration membrane.

The operation method of the membrane module is not particularly limited as long as the gelatin concentration of the concentrated liquid finally recovered is greater than the gelatin concentration of the introduced feed, but an operation method (cross-flow filtration operation) of repeatedly bringing the concentrated liquid into contact with the membrane module by performing a reflux operation of returning the non-filtrated liquid to a feed tank or a circulation operation of returning the non-filtrated liquid to a feed introduction flow path of the membrane module is preferred.

By generating a flow perpendicular to a membrane permeating flow, that is, a cross flow, inside the membrane module by the reflux operation or circulation operation, a concentration gradient of a gelatin component is generated near the surface of the membrane, making it easier for water to permeate the membrane. In addition, the cross flow may scrape off some of the gelatin component that is deposited on the surface of the membrane, similarly making it easier for water to permeate the membrane. If the filtration pressure is too high for the effect of the cross flow, a layer of the gelatin component deposited on the surface of the membrane will become compacted and a permeation flux will not become any faster. An upper limit of such a permeation flux is called a limit flux. However, as the gelatin solution becomes more concentrated, the concentration gradient becomes gentler, the effect of the cross-flow decreases, water becomes less easily to permeate the membrane, and the limit flux decreases. Accordingly, the treatment slows down and the energy required for concentration is increased, which is uneconomical.

For the reasons mentioned above, in the membrane concentration step, it is preferable to carry out the concentration so that the gelatin concentration of the resulting gelatin solution is 10 mass% or more and 20 mass% or less. By carrying out the concentration so that the gelatin concentration is 10 mass% or more and 20 mass% or less, the treatment speed can be improved and the concentration time and the energy used therefor can be reduced.

(1.4) Ultrafiltration Membrane Module Structure

A specific configuration of the ultrafiltration membrane module according to the present embodiment will be described with reference to FIG. 2, taking as an external-pressure type membrane module provided with a hollow fiber membrane as an example of the ultrafiltration membrane. FIG. 2 is a schematic cross-sectional view of the membrane module according to one embodiment of the present invention. Hereinafter, in the present specification, directions such as "upper", "lower", and the like are based on a state shown in the drawings and are for convenience, and in FIG. 2, a filtrate outlet 3 side is referred to as an upper direction and the feed inlet 2 side is referred to as a lower direction.

The membrane module 10 shown in FIG. 2 includes a container 1 including the feed inlet 2, the filtrate outlet 3, and the feed outlet 4, and the ultrafiltration membranes 5 with which the container 1 is filled. Each of the ultrafiltration membranes 5 has both ends embedded in a first potting portion 8 and a second potting portion 9 respectively.

The first potting portion 8 may be a so-called fixed end in which the ultrafiltration membranes are fixed to each other with a potting agent, or may be a free end that is not fixed with a potting agent. The free end refers to a state in which the ultrafiltration membranes are not fixed to each other with a potting agent and can move freely. Note that in the membrane module 10 shown in FIG. 2, a feed inlet side end of the ultrafiltration membrane 5 is sealed. As a method for sealing the feed inlet side end of the ultrafiltration membrane 5, a method of injecting a potting agent into the hollow portion of the ultrafiltration membrane 5 to seal, a method of welding the end by heat to seal, or the like can be applied.

Although the second potting portion 9 is fixed to the container 1, the second potting portion 9 and the container 1 may be adhesively fixed to each other, or the second potting portion 9 may have a so-called cartridge type structure in which the ultrafiltration membrane can be attached and detached, as long as the feed and the filtrate can be separated in a liquid-tight manner. In the case of the cartridge type, the second potting portion 9 and the container 1 may be connected via an O-ring or the like.

The first potting portion 8 includes a plurality of through holes through which the feed introduced from the feed inlet 2 passes. On the other hand, an upper end of the ultrafiltration membrane 5 embedded in the second potting portion 9 is embedded in an open state. The open state is a state in which the liquid flowing inside the ultrafiltration membrane 5 is discharged from the open end.

The feed inlet 2, the filtrate outlet 3, and the feed outlet 4 are cylindrical nozzles that connect the container 1 and a pipe (not shown), and are fixed to the cylindrical container 1 in an open state. The feed inlet 2 is connected to a lower end of the container 1, and the filtrate outlet 3 is connected to an upper end thereof. The feed outlet 4 is connected to a side surface of the container 1 and is provided near the second potting portion 9. Either resin or metal can be used as a material thereof.

The ultrafiltration membrane 5 packed in the container 1 is a hollow fibrous membrane (hollow fiber membrane) having a liquid separation function. The ultrafiltration membrane 5 is packed such that an axial direction of the container 1 is parallel to an axial direction of the ultrafiltration membrane 5. The axial directions refer to a length direction of the container 1 and a length direction of the ultrafiltration membrane 5.

The first potting portion 8 and the second potting portion 9 at which the plurality of ultrafiltration membranes are fixed by an adhesive are portions in which gaps between the bundled ultrafiltration membranes are filled with a potting agent containing a potting resin as a main component, which is the so-called adhesive. The potting portion is preferably formed at ends of the ultrafiltration membrane bundle.

In the membrane module having the above structure, the inside of the container 1 is separated by the ultrafiltration membrane 5 and the second potting portion 9 into a feed side space 6 and a filtrate side space 7. The feed side space 6 is a space with which an outer surface of the ultrafiltration membrane 5 is in contact, and the filtrate side space 7 is a space with which an inner surface of the ultrafiltration membrane 5 is in contact.

Since the membrane module shown in FIG. 2 is an external-pressure type membrane module, the feed inlet 2 and the feed outlet 4 are connected to the feed side space 6, and the filtrate outlet 3 is connected to the filtrate side space 7.

When the viscosity of the gelatin solution increases due to concentration, the pressure loss through the feed flow path due to the cross-flow increases, resulting in a decrease in a discharge rate of a pump or an increase in an operating power cost. In an external-pressure type membrane module, by reducing a filling density of the ultrafiltration membrane, a cross-sectional area of the cross-flow path can be increased, thereby reducing the pressure loss.

Therefore, when the membrane module is an external-pressure type membrane module, a membrane filling rate of the ultrafiltration membrane is preferably 20% or more and 50% or less. A membrane filling rate of 20% or more ensures a sufficient membrane area. The membrane filling rate is more preferably 25% or more, and still more preferably 30% or more. A membrane filling rate of 50% or less provides a sufficient cross-sectional area of the cross-flow path. The membrane filling rate is more preferably 45% or less.

Note that the membrane filling rate of the ultrafiltration membrane herein refers to a proportion of an area occupied by the ultrafiltration membranes in a cross section perpendicular to the axial direction of the container 1 of the membrane module between the first potting portion 8 and the second potting portion 9 (a surface parallel to a left-right direction of FIG. 2 and perpendicular to the paper surface, and hereinafter also referred to as a "transverse section"). Assuming that a cross-sectional area of a transverse section of an ultrafiltration membrane-existing section inside the container 1 is S1 and a total cross-sectional area of a transverse section of the ultrafiltration membranes is S2, a membrane filling rate M of the ultrafiltration membrane can be expressed by the following Equation (1).
[Formula 1]

$$M[\%] = S2/S1 \times 100 \quad \cdots (1)$$

Here, the ultrafiltration membrane-existing section refers to a certain section in which the ultrafiltration membranes exist.

Here, the total cross-sectional area S2 of the transverse section of the ultrafiltration membranes can be expressed by the following Equation (2) using an outer diameter R of the ultrafiltration membrane and the number N of ultrafiltration membranes in the ultrafiltration membrane-existing section. Here, $\pi$ is the ratio of circumference to diameter. For each of the ten ultrafiltration membranes in the ultrafiltration membrane-existing section, an outer diameter thereof is measured in two directions, the longest direction and the shortest direction. An average value of the measured values at all 20 positions is taken as an outer diameter R of the ultrafiltration membrane. Using this outer diameter R and assuming that the transverse section of the ultrafiltration membrane is a perfect circle, the total cross-sectional area S2 of the transverse section of the ultrafiltration membranes is calculated according to Equation (2). Note that when there are less than 10 ultrafiltration membranes in the ultrafiltration membrane-existing section, the outer diameters of all the ultrafiltration membranes in the ultrafiltration membrane-existing section are measured to calculate the average value.
[Formula 2]

$$S2 = \pi(R/2)^2 N \quad \cdots (2)$$

In the present embodiment, it is preferable that an effective membrane length L, which is a length of the ultrafiltration membrane in a flowing direction of the feed, that is, the gelatin solution, is $0.50 \, m \leq L \leq 2.00 \, m$. When $L \geq 0.50$ m, the membrane area of the membrane module is increased, so that the number of membrane modules required can be reduced. When $L \leq 2.00$ m, an excessive increase in pressure loss in the feed side space can be prevented, so that a feed introduction pressure of the membrane module becomes smaller and a load on a supply pump 14 can be reduced. That is, by setting the effective membrane length L within this range, it is possible to ensure the necessary membrane area while preventing an increase in pressure loss in the feed side space. The effective membrane length L is more preferably 0.70 m $\leq L \leq 1.50$ m, and still more preferably 0.80 m $\leq L \leq 1.20$ m.

Furthermore, a membrane area per unit volume of the membrane module is preferably 800 $m^2/m^3$ or more and 3700 $m^2/m^3$ or less. When the membrane area per unit volume is 800 $m^2/m^3$ or more, the time required for concentration can be shortened, and concentration can be performed in an energy-saving manner. When the membrane area per unit volume is 3700 $m^2/m^3$ or less, it is possible to prevent an increase in pressure loss caused by a reduction in the feed side space. The membrane area per unit volume of the membrane module is more preferably $900^2/m^3$ or more and 3000 $m^2/m^3$ or less, and still more preferably $1000^2/m^3$ or more and 2500 $m^2/m^3$ or less.

(1-5) Method for Operating Ultrafiltration Membrane Module

A specific method for operating the membrane module according to the present embodiment will be described with reference to FIG. 2, with example of a method for operating an external-pressure type membrane module provided with a hollow fiber membrane as the ultrafiltration membrane.

The membrane module can be operated in a dead-end filtration operation or a cross-flow filtration operation. The cross-flow filtration operation is preferred for the reasons mentioned above. However, in the cross-flow filtration operation, a high pressure loss occurs in the feed side space due to the flow of the feed. Therefore, a high feed side pressure is applied to the feed inlet side end of the ultrafiltration membrane, and thus the load on this portion is high. On the other hand, a pressure loss also occurs in the filtrate side space due to the flow of the filtrate.

In the case of the cross-flow filtration operation, the flow of the filtrate is generally slower than the flow of the feed, so that the pressure loss occurring in the filtrate side space is small. However, in the case of the external-pressure type membrane module, the flow path in the filtrate side space 7 is smaller than the flow path in the feed side space 6, so that a relatively high pressure loss also occurs in the filtrate side space 7. As a result, at the feed inlet side end of the ultrafiltration membrane 5, both the feed side pressure and the filtrate side pressure become high, so that the transmembrane differential pressure in the external-pressure type membrane module can be prevented from increasing.

However, in the case where the feed and the filtrate are different in viscosity, particularly in the case where viscosity-increasing components in the feed is held in the feed side space by the ultrafiltration membrane and the viscosity of the filtrate is smaller than that of the feed, the pressure loss in the filtrate side space is smaller than the pressure loss in the feed side space. As a result, in the case of the external-pressure type membrane module, on the feed inlet side end of the ultrafiltration membrane, the feed side pressure is high, and the filtrate side pressure is small, and the transmembrane differential pressure on this position tends to be increased. For this reason, regardless of whether the ultrafiltration membrane is an external-pressure type or an internal-pressure type, an excessive liquid volume is filtrated at the feed inlet side end of the ultrafiltration membrane as compared with the filtrate outlet side end, which leads to clogging of the ultrafiltration membrane by turbid components contained in the feed, which is so-called fouling. When fouling is promoted, the filtration rate decreases, so that the time required for filtration increases and the energy required for filtration also increases.

In order to inhibit the progressing of fouling, in the membrane concentration step according to one embodiment of the present invention, the operation is started such that when a ratio ($\mu_f/\mu_p$) of a viscosity $\mu_f$ of the feed, that is, the gelatin solution, to a viscosity $\mu_p$ of the filtrate satisfies $\mu_f/\mu_p \geq 1.5$, a flow rate ratio of a flow rate $v_f$ of the gelatin solution to a flow rate $v_p$ of the filtrate satisfies $0.020 \leq v_p/v_f \leq 0.15$. When the ratio ($\mu_f/\mu_p$) of the viscosity $\mu_f$ of the gelatin solution to the viscosity $\mu_p$ of the filtrate is 1.5 or more, the transmembrane differential pressure difference in the axial direction of the ultrafiltration membrane can be reduced by controlling the flow rate $v_f$ of the gelatin solution and the flow rate $v_p$ of the filtrate within the above range.

Note that when a total filtration time is assumed as 100%, it is preferable to control the flow rates within the above range in a time section of 50% or more of the total filtration time including the start of the membrane concentration step, still more preferably 75% or more, and most preferably for the entire time section.

When the ratio ($\mu_f/\mu_p$) of the viscosity $\mu_f$ of the gelatin solution to the viscosity $\mu_p$ of the filtrate is 1.5 or more, the pressure loss in the filtrate space becomes smaller than the pressure loss in the gelatin solution side space, but by controlling the flow rate ratio of the flow rate $v_f$ of the gelatin solution to the flow rate $v_p$ of the filtrate to $0.020 \leq v_p/v_f \leq 0.15$, it is possible to ensure a necessary filtrate flow amount and reduce the filtration cost while homogenizing the pressure loss on the gelatin solution side and the filtrate side, and inhibiting the progressing of fouling, thereby improving the filtration performance, and concentrating the gelatin solution in an energy-saving manner.

When $v_p/v_f$ is 0.020 or more, the pressure loss on the gelatin solution side is small, or the pressure loss on the filtrate side is large, so that the transmembrane differential pressure difference is reduced and the filtration performance is improved. Furthermore, since the filtrate flow amount is large relative to a circulation flow amount of the gelatin solution, the number of membranes required can be reduced, leading to a reduced filtration cost. When $v_p/v_f$ is 0.15 or less, the circulation flow amount of the gelatin solution becomes large relative to the filtrate flow amount, and therefore the transmembrane differential pressure difference becomes large, but since an effect of preventing accumulation of turbid components on the surface of the ultrafiltration membrane due to the flow of the gelatin solution generated by the cross-flow filtration operation becomes large, and therefore the filtration performance is improved. The ratio ($\mu_f/\mu_p$) of the viscosity $\mu_f$ of the gelatin solution to the viscosity $\mu_p$ of the filtrate is preferably 0.030 or more.

As described above in the membrane concentration step according to one embodiment of the present invention, the operation may be started such that the ratio ($\mu_f/\mu_p$) of the viscosity $\mu_f$ of the gelatin solution to the viscosity $\mu_p$ of the filtrate satisfies $\mu_f/\mu_p \geq 1.5$ and the flow rate ratio of the flow rate $v_f$ of the gelatin solution to the flow rate $v_p$ of the filtrate satisfies $0.020 \leq v_p/v_f \leq 0.15$.

A method for measuring the flow rate $v_f$ of the gelatin solution and the flow rate $v_p$ of the filtrate is described in an external-pressure type membrane module with reference to FIG. 2 and FIG. 3, but it is also possible to measure in an internal-pressure type membrane module by replacing relations between the feed side/filtrate side and the inside/outside of the ultrafiltration membrane.

The flow rate $v_f$ of the gelatin solution is calculated by dividing a concentrated liquid flow amount $Q_c$ measured by a concentrated liquid flowmeter 31 by a flow path area $S_f$ of the feed side space 6 of the membrane module 10. The flow path area $S_f$ of the feed side space 6 is a value obtained by subtracting the total cross-sectional area of the ultrafiltration membranes 5 inserted into the container 1 from a cross-sectional area of the container 1, and is calculated according to the following Equation (3), where $D_c$ is an inner diameter of the container 1, $D_o$ is an outer diameter of the ultrafiltration membranes 5, and N is the number of ultrafiltration membranes 5.

[Formula 3]

$$v_f = \frac{Q_c}{S_f} = \frac{Q_c}{\pi(D_c/2)^2 - \pi(D_0/2)^2 N} \quad \cdots (3)$$

The flow rate $v_p$ of the filtrate is calculated by dividing a filtrate flow amount $Q_p$ measured by a filtrate flowmeter 32 by a flow path area $S_p$ of the filtrate side space 7. The flow path area $S_p$ of the filtrate side space 7 is calculated by the following Equation (4), where $D_i$ is an inner diameter of the ultrafiltration membranes 5.
[Formula 4]

$$v_p = \frac{Q_p}{S_p} = \frac{Q_p}{\pi(D_i/2)^2 N} \quad \cdots (4)$$

Regarding the flow rate $v_f$ of the gelatin solution, instead of the concentrated liquid flow amount $Q_c$, a supplied liquid flowmeter may be provided between the feed inlet 2 and the supply pump 14, and a measured supplied liquid flow amount $Q_f$ may be used. Also in this case, the flow rate $v_f$ of the gelatin solution is calculated in the same manner.
Since the values of the viscosity $\mu_f$ of the gelatin solution and the viscosity $\mu_p$ of the filtrate greatly change with temperature, it is preferable to measure the viscosity at a gelatin solution temperature measured by a feed thermometer 51. Furthermore, since the viscosity may change due to shearing caused by the flow of the gelatin solution or the filtrate, it is preferable to measure the viscosity when a shear speed $\gamma$ due to the flow during operation is applied.
The shear speed $\gamma$ is simply calculated from a flow rate v and a flow path diameter $D_e$ by the following Equation (5). When the ultrafiltration membrane 5 is a hollow fiber membrane, the flow path diameter $D_e$ of the filtrate side space 7 is the inner diameter $D_i$. On the other hand, since the flow path diameter $D_c$ of the feed side space 6 has a complicated shape, an equivalent diameter calculated by the following Equation (6) is defined as the flow path diameter $D_c$.
[Formula 5]

$$\gamma = \frac{4v}{D_e} \quad \cdots (5)$$

[Formula 6]

$$D_e = \frac{4S_f}{\pi D_0 N + \pi D_c} \quad \cdots (6)$$

As for a method for measuring the viscosity, a viscosity measured at the same temperature and shear speed as in actual operation using a capillary viscometer is defined as the viscosity in the present embodiment. That is, the method is measuring a viscosity $\mu$ using the following Equation (7) from a tube inlet pressure $P_1$ and a tube outlet pressure $P_2$ when a fluid is passed through a fine tube having a tube inner diameter $D_v$ and a tube length $L_v$ at a flow rate $v_v$. Using the above Equation (5), the flow rate $v_v$ in the fine tube is set so that the shear speed during the actual operation and the shear speed in the capillary viscometer are the same, and then the viscosity is measured.
[Formula 7]

$$\mu = \frac{D_v^2(P_1 - P_2)}{32 v_v L_v} \quad \cdots (7)$$

The capillary viscometer is not particularly limited as long as the temperature of the fine tube can be adjusted and the pressure at the tube inlet and tube outlet can be measured, and any commercially available or self-produced apparatus can be used.
The flow rate $v_f$ of the gelatin solution preferably satisfies $0.30 \text{ m/s} \leq v_f \leq 1.80 \text{ m/s}$. When $v_f \geq 0.30 \text{ m/s}$, the flow of the gelatin solution caused by the cross-flow filtration operation has a large effect of preventing the accumulation of turbid components on the surface of the ultrafiltration membrane, and the progressing of fouling can be inhibited. When $v_f \leq 1.80$

m/s, the effect of preventing the accumulation of turbidity on the surface of the ultrafiltration membrane caused by the action of the flow of the gelatin solution is reduced, but on the other hand, the pressure loss in the feed side space 6 is reduced, and a high feed side pressure can be prevented from being applied to the feed inlet side end of the ultrafiltration membrane 5. As a result, the load on this position can be reduced, and as a result, the progressing of fouling can be inhibited. The flow rate $v_f$ of the gelatin solution more preferably satisfies $0.50 \, \text{m/s} \leq v_f < 1.50 \, \text{m/s}$, and still more preferably satisfies $0.70 \, \text{m/s} \leq v_f < 1.30 \, \text{m/s}$.

As described above, it is most preferable to control the flow rate ratio of the flow rate $v_p$ of the filtrate to the flow rate $v_f$ of the gelatin solution to satisfy $0.020 \leq v_p/v_f \leq 0.15$ during the whole time of the cross-flow filtration operation of the gelatin solution using an external-pressure type membrane module, but it is sufficient to control the flow rate ratio within this range when starting the operation. The start of the operation is a timing at which filtration is started for the first time by introducing the gelatin solution into a new ultrafiltration membrane module, or a timing at which filtration is started by newly introducing the gelatin solution after chemically cleaning the ultrafiltration membrane module blocked after filtration to recover water transmissivity.

As the cross-flow filtration operation is continued, the fouling proceeds, and then the transmembrane differential pressure difference of the ultrafiltration membrane 5 in the axial direction is reduced. When the flow rate ratio of the flow rate $v_p$ of the filtrate to the flow rate $v_f$ of the gelatin solution is outside the above range from the start of operation, clogging on the surface of the ultrafiltration membrane occurs more quickly and a rate of mitigation also increases. Therefore, in order to inhibit fouling, it is preferable to control the flow rate ratio of the flow rate $v_p$ of the filtrate to the flow rate $v_f$ of the gelatin solution at the start of operation.

Furthermore, it is preferable that the ultrafiltration membrane module of the present embodiment is operated so that the flow rate $v_f$ of the gelatin solution and the viscosity $\mu_f$ of the gelatin solution satisfy a relation of $v_f < -0.135\mu_f + 3.0$. The flow rate $v_f$ of gelatin solution is a value calculated by the above Equation (3) and the unit thereof is m/s. The viscosity $\mu_f$ of the gelatin solution is a viscosity at an actually operating temperature, and the unit thereof is mPa·s.

When the flow rate $v_f$ of the gelatin solution satisfies the relation of $v_f < -0.135\mu_f + 3.0$, the shearing force applied to the ultrafiltration membrane 5 by the flow of the gelatin solution near the feed outlet 4 is reduced, so that it is possible to prevent the occurrence of fiber breakage and membrane damage. The flow rate $v_f$ of the gelatin solution more preferably satisfies a relation of $v_f < -0.135\mu_f + 2.5$, and still more preferably satisfies a relation of $v_f < -0.135\mu_f + 2.3$.

In the present embodiment, it is preferable that the viscosity $\mu_f$ of the gelatin solution concentrated by the membrane concentration step is 2.0 mPa·s or more. When the viscosity of the gelatin solution is 2.0 mPa·s or more, the membrane concentration step can be started from a relatively high concentration, and the load of the membrane concentration is reduced. The viscosity $\mu_f$ of the gelatin solution is more preferably 2.2 mPa·s or more, and still more preferably 2.5 mPa·s or more. From the viewpoint of the energy required for cross-flow filtration operation, the viscosity $\mu_f$ of the gelatin solution is preferably 100 mPa·s or less, more preferably 50 mPa·s or less, and still more preferably 20 mPa·s or less.

Furthermore, a ratio ($v_f/A$) of the flow rate $v_f$ of the gelatin solution per one ultrafiltration membrane module to the effective membrane area A per one ultrafiltration membrane module is preferably 0.5 m/h or more and 3.5 m/h or less. However, when a plurality of membrane modules are arranged in series, all the membrane modules arranged in series are considered to be one unit.

When $v_f/A$ is 0.5 m/h or more, rapid concentration during liquid passing through the membrane module can be prevented, so that a sufficient effect of the cross flow at the outlet side of the membrane module can be obtained. When $v_f/A$ is 3.5 m/h or less, the energy required for supplying the gelatin solution relative to a yield of the concentrated liquid can be reduced, which is economical. More preferably, $v_f/A$ is 3.0 m/h or less, and even more preferably, 2.5 m/h or less.

In addition, a ratio ($v_f/V$) of the flow rate $v_f$ of the gelatin solution per one membrane module to a volume V per one membrane module is preferably 600/h or more and 4000/h or less. However, when a plurality of membrane modules are arranged in series, all the membrane modules arranged in series are considered to be one unit.

When $v_f/V$ is 600/h or more, heat radiation due to an increase in a retention amount in the membrane module can be prevented, and the energy required for heat retention can be reduced. When $v_f/V$ is 4000/h or less, a gelatin solution supply pump required for the size of the apparatus can be made small, and the yield of concentrated liquid per installation area can be increased. More preferably, $v_f/V$ is 1000/h or more and 3000/h or less, and still more preferably 1500/h or more and 2500/h or less.

(2) Thermal Concentration of Gelatin Solution

The thermal concentration step according to the present embodiment is a step of evaporating water from the gelatin solution by heat after the membrane concentration step, and further concentrating the gelatin solution. The method of thermal concentration is not particularly limited, but in order to prevent thermal decomposition of gelatin, a low-temperature evaporation process under a reduced pressure and a thin film ascending evaporation process in which a boiling point rise due to a liquid depth to a heat transfer surface is small are preferably adopted.

Examples of a method for preventing the thermal decomposition of gelatin include a process of thermally concentrating the gelatin solution by keeping a surface temperature thereof at 60°C or less. In the thermal concentration, the surface temperature of the gelatin solution is set to 60°C or less, so that denaturation of gelatin can be prevented. From the viewpoint of evaporation rate, the gelatin solution is preferably thermally concentrated at a surface temperature of 40°C or higher, more preferably 50°C or higher.

When the thermal concentration is carried out under a reduced pressure, a degree of reduction in pressure is appropriately determined depending on the concentration temperature of the gelatin solution, but from the viewpoint of boiling point, atmospheric pressure (0.10 MPa) or less is preferable, and 0.02 MPa or less is more preferable.

Here, assuming that $T_w$ is a boiling point of pure water and $T_{BPR}$ is a boiling point rise, a boiling point $T_b$ of the gelatin solution is expressed as $T_b = T_w + T_{BPR}$. The boiling point rise of the gelatin solutions is affected by the liquid depth and a solute concentration. For example, a pressure at which the boiling point of pure water becomes 60°C is approximately 20 kPa. When the heat transfer surface is in a distance h away from a liquid surface, a pressure at the heat transfer surface is higher than the liquid surface by a water pressure $p = \rho gh$, so that when the liquid depth is 1 m, the pressure is approximately 10 kPa higher, and when evaporation is performed with an air pressure of 20 kPa, the boiling point at the heat transfer surface is approximately 70°C. Here, $\rho$ is a density of pure water, and g is a gravitational acceleration.

As a further example, when 25 mass% of salt is dissolved as a solute, a boiling point rise is approximately 5°C, and in the above example, a boiling point of the salt water becomes approximately 75°C.

As in the above example, in order to thermally concentrate the gelatin solution at a low temperature, it is important to combine the operations of reducing pressure and thinning, and it is important to reduce a molar concentration of the solute in the solution before the thermal concentration step, and in particular to remove low molecular weight components that greatly affect the molar concentration. In the present embodiment, by carrying out the membrane concentration step before the thermal concentration step, the low molecular weight components in the gelatin solution can be removed, making it possible to carry out the thermal concentration at a low temperature, thereby achieving energy saving.

In the thermal concentration step, it is preferable to carry out the concentration so that the gelatin concentration of the resulting gelatin solution is 20 mass% or more and 50 mass% or less. The gelatin concentration is more preferably 30 mass% or more and 45 mass% or less. When the gelatin concentration is 20 mass% or more, a sufficient effect of improving the drying efficiency can be obtained in the subsequent drying step. When the gelatin concentration is 50 mass% or less, occurrence of poor thinning due to an increase in viscosity is prevented, and further, the boiling point rise due to the solute concentration is small, allowing processing at a liquid temperature at which thermal decomposition of gelatin is prevented.

<Post-treatment and Drying>

In the method for producing gelatin or a concentrated gelatin solution according to one embodiment of the present invention, the gelatin solution after concentration obtained above, that is, the concentrated gelatin solution, may be sequentially subjected to post-treatments such as sterilization and molding, and drying by known methods in the related art.

A method of sterilization is not particularly limited, but can be performed by, for example, high-temperature heating. A method of molding is not particularly limited, but examples thereof include a method of pouring the gelatin solution into a certain container and gelling, and a method of discharging the gelatin solution from an inkjet head and laminating the gelatin solution three-dimensionally. A method of drying is not particularly limited, but examples thereof include freeze-drying, a method in which a gel of gelatin is obtained and then subjected to ventilation drying, and a method of drying under a reduced pressure.

Examples

Hereinafter, the present invention will be described in more detail with reference to Examples, but the present invention is not limited to these Examples.

<Preparation of Gelatin Solution>

As a gelatin solution after extraction, commercially available edible gelatin and salt were dissolved both to a concentration of 5 mass% in pure water at 60°C. The resulting unconcentrated gelatin solution was kept at 60°C and subjected to the concentration process within 24 hours.

<Measurement of Gelatin Concentration>

A protein concentration in the gelatin solution was measured from an absorbance at a wavelength of 292 nm using a microplate reader Multiskan Sky TC manufactured by Thermo Fisher Scientific.

Furthermore, molecular weight distribution was measured by high performance liquid chromatography under the following conditions, and a ratio of a peak area corresponding to a molecular weight of 100,000 or more to a peak area corresponding to a molecular weight of 1,000 or more was calculated from the obtained elution curve, and the gelatin concentration was calculated by multiplying the ratio by the protein concentration.

(Conditions)

Column: shodex Asahipak GS620-7G, 2 columns in series
Detector: ultraviolet absorption detector (wavelength 230 nm)
Eluent: 0.05M potassium dihydrogen phosphate/0.05M disodium hydrogen phosphate aqueous solution
Flow rate: 1.0 mL/min
Column temperature: 50°C
Test solution concentration: 0.2% (2% aqueous solution was diluted 10 times with eluent)
Injection amount of test solution: 100 $\mu$L

<Viscosity Measurement of Gelatin Solution>

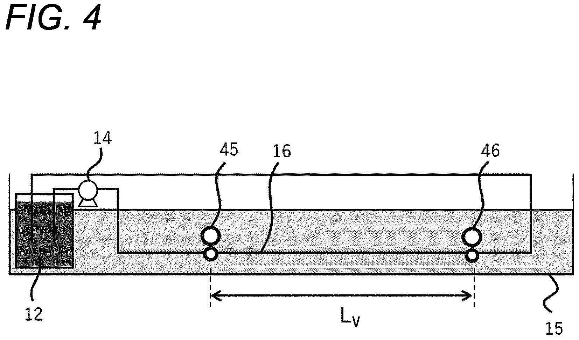

The viscosity of the unconcentrated gelatin solution was measured using an apparatus shown in FIG. 4. A feed tank 12 and a fine tube 16 were placed in a thermostatic water bath 15, and were connected to each other by a fluorine tube so that the gelatin solution can be supplied to and returned from the fine tube 16. The fluorine tube in the fine tube 16 has an inner diameter of 2.0 mm and a tube length $L_v$ of 1.0 m. A tube inlet pressure gauge 45 and a tube outlet pressure gauge 46 were connected to both ends of the fine tube, respectively. Water was supplied into the thermostatic water bath 15, and a temperature of the feed was adjusted to the same temperature as that during actual operation.

Thereafter, a shear speed was obtained from the flow path diameter $D_e$ of the ultrafiltration membrane module used in the actual operation and the flow rate v, and a flow rate $v_v$ of the gelatin solution to be sent to the fine tube was set so that the shear speed was equivalent to a shear speed $\gamma$ of an actual module. The gelatin solution was supplied by the supply pump 14 at the set flow rate $v_v$, and the viscosity was calculated from a measured tube inlet pressure $P_1$ and tube outlet pressure $P_2$ using the above Equation (7).

A viscosity of the unconcentrated gelatin solution at 60°C was 2.2 mPa·s.

<Measurement of Load At Breaking>

The load at breaking was measured by testing a sample having a measurement length of 50 mm five times or more using a tensile tester (TENSILON (registered trademark)/RTM-100, manufactured by BALDWIN JAPAN LTD) in an atmosphere at 25°C and at a stretching speed of 50 mm/min while changing the sample, and then obtaining an average value.

<Limit Flux Measurement>

A limit flux was measured as follows. Using an ultrafiltration membrane prepared as described below, cross-flow filtration was carried out while changing a filtration flux, and a transmembrane differential pressure at each filtration flux was measured. A point at which the transmembrane differential pressure suddenly increased was taken as the limit flux (m/day).

<Measurement of Boiling Point Rise>

A boiling point of the gelatin solution was measured under the atmospheric pressure condition based on JIS K 0066:1992. A difference from a boiling point of pure water, that is, 100°C, was taken as the boiling point rise (°C).

<Preparation of Ultrafiltration Membrane>

[Reference Example 1]

At 150°C, 38 mass% of vinylidene fluoride homopolymer having a weight average molecular weight of 417,000 and 62 mass% of γ-butyrolactone were dissolved. This vinylidene fluoride homopolymer solution was discharged from an outer tube of a double-tube spinneret, and at the same time, an 85 mass% aqueous solution of γ-butyrolactone was discharged from an inner tube of the double-tube spinneret, and after solidifying in a bath of the 85 mass% aqueous solution of γ-butyrolactone at 9°C, the membrane was washed with water and stretched 1.5 times in water at 85°C to obtain a support membrane. Note that the support membrane is an ultrafiltration membrane in a hollow fiber shape.

[Reference Example 2]

A functional layer was formed on the support membrane obtained in Reference Example 1 to obtain a composite ultrafiltration membrane. As the formation of the functional layer, first, at a temperature of 95°C, 12 mass% of vinylidene fluoride homopolymer having a weight average molecular weight of 284,000, 7.2 mass% of cellulose acetate, and 80.8 mass% of N-methyl-2-pyrrolidone were mixed and dissolved to prepare a high molecular solution. The obtained high molecular solution was uniformly applied to a surface of the support membrane having a spherical structure obtained in Reference Example 1, and immediately coagulated in a coagulation bath of 100% water at room temperature to form the functional layer on the support membrane, thereby producing the composite ultrafiltration membrane which is a hollow fiber membrane. The resulting ultrafiltration membrane had a load at breaking of 1010 gf/membrane. The blocking rate R of the obtained membrane against dextran having a weight average molecular weight of 40,000 was 45%.

<Preparation of Ultrafiltration Membrane Module>

[Reference Example 3]

The ultrafiltration membrane obtained in Reference Example 2 was cut into a plurality of pieces having a length of approximately 40 cm, and wrapped by a polyethylene film to form an ultrafiltration membrane bundle. This ultrafiltration membrane bundle was inserted into a cylindrical polycarbonate module case, and both ends thereof were fixed with an epoxy potting agent. The ends were cut to obtain a membrane module with both ends open (module volume $1.7 \times 10^{-5} m^3$). The number of ultrafiltration membranes was appropriately set so as to obtain a membrane area of 0.02 $m^2$. A membrane filling rate of the ultrafiltration membrane was 40%, and the effective membrane length in the axial direction was 0.3 m. Note that the cylindrical module case was provided with ports at two positions near both ends to allow an outer surface of the ultrafiltration membrane to be perfused with liquid, and an end cap with an inlet and outlet for liquid was attached to one end, and an end cap that seals the liquid was attached to the other end.

[Reference Example 4]

A membrane module was prepared in the same manner as in Reference Example 3, except that the number of ultrafiltration membranes was appropriately set so as to have a membrane area of 0.005 $m^2$. A membrane filling rate of the ultrafiltration membrane was 10%, and the effective membrane length was 0.3 m.

[Reference Example 5]

A membrane module was prepared in the same manner as in Reference Example 3, except that the number of ultrafiltration membranes was appropriately set so as to have a membrane area of 0.03 $m^2$. A membrane filling rate of the ultrafiltration membrane was 60%, and the effective membrane length was 0.3 m.

[Reference Example 6]

The ultrafiltration membrane obtained in Reference Example 2 was cut to a length of 1.2 m, immersed in a 30 mass% glycerin aqueous solution for 1 hour, and then air-dried. Thereafter, the filtrate outlet side end of the ultrafiltration membrane was sealed with a silicone adhesive (SH850A/B manufactured by Dow Toray Co., Ltd., a mixture of two agents at a mass ratio of 50:50).
Thereafter, as shown in FIG. 2, the container 1 (inner diameter: 97.6 mm, length: 1100 mm) was filled with the above-described ultrafiltration membrane such that the sealed filtrate outlet side end was positioned on the filtrate outlet 3 side. The feed outlet 4 is provided on the filtrate outlet 3 side on a side surface of the container 1.

Subsequently, a first potting portion forming jig was attached to the feed inlet 2 side of the container 1, and a second potting portion forming jig was attached to the filtrate outlet 3 side. A pin having a diameter of 7 mm and a length of 100 mm was inserted into the first potting portion forming jig in the same direction as the axial direction of the ultrafiltration membrane in order to open a through hole for introducing the feed into the feed side space 6.

As a potting agent, a bisphenol F type epoxy resin (LST868-R14, manufactured by Huntsman Corporation) and an aliphatic amine-based curing agent (LST868-H14, manufactured by Huntsman Corporation) were mixed at a mass ratio of 100:30, and a total of 800 g of the mixture (400 g per end) was put into a potting agent injector.

Subsequently, a centrifugal molding machine was rotated, and the potting agent was injected into the first potting portion forming jig and the second potting portion forming jig at both ends of the container 1 to mold the first potting portion 8 and the second potting portion 9, and the potting agent was cured. The centrifugal molding machine had an inside temperature of 35°C, a rotational speed of 300 rpm, and a centrifugal time of 5 hours.

After curing, the first potting portion forming jig, the second potting portion forming jig, and the pin were removed, and after curing at room temperature for 24 hours, and the end of the second potting portion 9 was cut with a tip saw type rotary blade to open an end surface of the ultrafiltration membrane on the filtrate outlet side.

Next, a lower cap having the feed inlet 2 and an upper cap having the filtrate outlet 3 were attached to the container 1 to form an ultrafiltration membrane module (module volume $2.1 \times 10^{-2}\,\text{m}^3$). In this case, the effective membrane length in the axial direction of the ultrafiltration membrane was 1.0 m, the filling rate of the ultrafiltration membrane was 40%, and the membrane area was 9.2 $\text{m}^2$.

<Concentration of Gelatin Solution>

The gelatin solution was subjected to at least one of the membrane concentration step and the thermal concentration step under the following conditions. An upper limit of a withstand pressure of an operating device of the membrane modules obtained in Reference Examples 3 to 5 is 0.2 MPa, and an upper limit of a withstand pressure of an operating device of the membrane module obtained in Reference Example 6 is 0.4 MPa. For Examples 1 to 6 and Comparative Examples 1 to 5, the gelatin concentration after each concentration step, the limit flux at the end of the membrane concentration step, and the boiling point rise of the finally obtained concentrated gelatin solution are shown in Table 1.

[Example 1]

The membrane module obtained in Reference Example 3 was filled with pure water and left to stand for 1 hour or more, after which the pure water on the outside of the ultrafiltration membrane was discharged. The unconcentrated gelatin solution maintained at 60°C was prepared for 1 L, and 500 mL thereof was transferred to a container A. A circuit was set up in which the outer surface of the ultrafiltration membrane was perfused with the gelatin solution from the container A via a pump at a flow rate of 1 m/sec and then the gelatin solution was returned to the container A, while at the same time the filtrate filtrated by the ultrafiltration membrane was collected in a container B different from the container A.

As the membrane concentration step, membrane filtration operation was performed until the liquid volume in the container A reached 200 mL. The operating flux was always at the limit flux. The limit flux at a liquid volume of 200 mL was 0.60 m/day, and the gelatin concentration of the gelatin solution recovered in the container A was 11 mass%. The limit flux at the start of the membrane filtration operation was 2.20 m/day, and the ratio ($\mu_f/\mu_p$) of the viscosity $\mu_f$ of the gelatin solution to the viscosity $\mu_p$ of the filtrate was 3.8, and the ratio ($v_p/v_f$) of the flow rate $v_f$ of the gelatin solution to the flow rate $v_p$ of the filtrate was calculated to be 0.09. The time required for the membrane filtration operation was 25 minutes.

To a 500 mL eggplant-shaped flask, 120 mL of the gelatin solution in the container A was transferred, and thermal concentration was carried out under a reduced pressure at 60°C using a rotary evaporator until 80 mL of condensed liquid was collected. The gelatin concentration of the gelatin solution recovered in the eggplant-shaped flask was 33 mass%, and the boiling point rise was 1°C.

[Example 2]

The same process as in Example 1 was carried out, except that the membrane filtration operation was performed until the liquid volume in the container A reached 150 mL, and then thermal concentration under a reduced pressure was performed at 60°C until 75 mL of the concentrated liquid was recovered.

The limit flux at a liquid volume of 150 mL in the container A was 0.24 m/day, and the gelatin concentration of the gelatin solution recovered in the container A was 15 mass%. The time required for the filtration operation was 35 minutes.

The gelatin concentration of the gelatin solution recovered in the eggplant-shaped flask was 40 mass%, and the boiling point rise was 1°C.

[Example 3]

The membrane module obtained in Reference Example 6 was filled with pure water and left to stand for 1 hour or more, after which the pure water on the outside of the ultrafiltration membrane was discharged. The unconcentrated gelatin solution maintained at 60°C was prepared for 300 L, and 230 L thereof was transferred to the container A. A circuit was set up in which the outer surface of the ultrafiltration membrane was perfused with the gelatin solution from the container A via a pump at a flow rate of 1 m/sec and then the gelatin solution was returned to the container A, while at the same time the filtrate filtrated by the ultrafiltration membrane was collected in a container B different from the container A. The operating flux was always at the limit flux.

As the membrane concentration step, membrane filtration operation was performed until the liquid volume in the container A reached 92 L. The limit flux at a liquid volume of 92 L was 0.30 m/day. The limit flux at the start of the membrane filtration operation was 0.80 m/day, and the ratio ($\mu_f/\mu_p$) of the viscosity $\mu_f$ of the gelatin solution to the viscosity $\mu_p$ of the filtrate was 3.8, and the ratio ($v_p/v_f$) of the flow rate $v_f$ of the gelatin solution to the flow rate $v_p$ of the filtrate was calculated to be 0.11. The gelatin concentration of the gelatin solution recovered in the container A was 11 mass%. The time required for the membrane filtration operation was 25 minutes.

To a 500 mL eggplant-shaped flask, 120 mL of the gelatin solution in the container A was transferred, and thermal concentration was carried out under a reduced pressure at 60°C using a rotary evaporator until 80 mL of condensed liquid was collected. The gelatin concentration of the gelatin solution recovered in the eggplant-shaped flask was 33 mass%, and the boiling point rise was 1°C.

[Example 4]

The same process as in Example 1 was carried out, except that the membrane filtration operation was performed using the membrane module obtained in Reference Example 4. At the start of the membrane filtration operation, the ratio ($\mu_f/\mu_p$) of the viscosity $\mu_f$ of the gelatin solution to the viscosity $\mu_p$ of the filtrate was 3.8, and the flow rate ratio ($v_p/v_f$) of the flow rate $v_f$ of the gelatin solution to the flow rate $v_p$ of the filtrate was calculated to be 0.09. The gelatin concentration, limit flux, and boiling point rise after each concentration step were the same values as in Example 1, and the time required for the membrane filtration operation was 100 minutes.

[Example 5]

The same process as in Example 1 was carried out, except that the membrane filtration operation was performed using the membrane module obtained in Reference Example 5. At the start of the membrane filtration operation, the ratio ($\mu_f/\mu_p$) of the viscosity $\mu_f$ of the gelatin solution to the viscosity $\mu_p$ of the filtrate was 3.8, and the flow rate ratio ($v_p/v_f$) of the flow rate $v_f$ of the gelatin solution to the flow rate $v_p$ of the filtrate was calculated to be 0.09. The gelatin concentration, limit flux, and boiling point rise after each concentration step were the same values as in Example 1, and the time required for the membrane filtration operation was 17 minutes.

[Example 6]

An ultrafiltration membrane was obtained in the same manner as in Reference Example 2, except that the coagulation bath in Reference Example 2 was heated to 50°C. The resulting ultrafiltration membrane had a blocking rate R of 35% for dextran having a weight average molecular weight of 40,000, and a load at breaking of 500 gf/membrane. Next, an ultrafiltration membrane module was produced in the same manner as in Reference Example 3 using the ultrafiltration membrane obtained above.

Using this ultrafiltration membrane module, the gelatin solution was concentrated in the same manner as in Example 1, except that the membrane filtration operation was carried out until the liquid volume in the container A reached 150 mL. At the start of the membrane filtration operation, the ratio ($\mu_f/\mu_p$) of the viscosity $\mu_f$ of the gelatin solution to the viscosity $\mu_p$ of the filtrate was 2.0, and the flow rate ratio ($v_p/v_f$) of the flow rate $v_f$ of the gelatin solution to the flow rate $v_p$ of the filtrate was calculated to be 0.09. The gelatin concentration after each concentration step was the same value as in Example 1, and the time required for the membrane filtration operation was 100 minutes. The limit flux at the end of the membrane concentration was 0.40 m/day, and the boiling point rise was 0°C.

[Comparative Example 1]

To a 500 mL eggplant-shaped flask, 150 mL of the unconcentrated gelatin solution was transferred, and thermal concentration was carried out under a reduced pressure at 60°C using a rotary evaporator until 130 mL of condensed liquid was collected.

The gelatin concentration of the gelatin solution recovered in the eggplant-shaped flask was 33 mass%, and the boiling point rise was 7°C.

[Comparative Example 2]

Only the membrane filtration operation was carried out in the same manner as in Example 1 until the liquid volume in the container A reached 75 mL. The limit flux at a liquid volume of 75 mL in the container A was 0.03 m/day, and the gelatin concentration of the gelatin solution recovered in the container A was 31 mass%, and the boiling point rise was 1°C. The time required for the membrane filtration operation was 120 minutes.

[Comparative Example 3]

To a 500 mL eggplant-shaped flask, 120 mL of the unconcentrated gelatin solution was transferred, and thermal concentration was carried out under a reduced pressure at 60°C using a rotary evaporator until 60 mL of condensed liquid was collected. The same test was repeated five times, and a total of 300 mL of the gelatin solution recovered in the eggplant-shaped flask was transferred to the container A. The membrane filtration operation was carried out in the same manner as in Example 1 until the liquid volume in the container A reached 100 mL. The time required for the membrane filtration operation was 105 minutes. The limit flux at a liquid volume of 100 mL was 0.03 m/day, and the gelatin concentration of the gelatin solution recovered in the container A was 33 mass%, and the boiling point rise was 2°C.

[Comparative Example 4]

The process was the same as in Example 1, except that the outer surface of the ultrafiltration membrane was perfused at a flow rate of 5 m/sec. At the start of the membrane filtration operation, the ratio ($\mu_f/\mu_p$) of the viscosity $\mu_f$ of the gelatin solution to the viscosity $\mu_p$ of the filtrate was 3.8, and the flow rate ratio ($v_p/v_f$) of the flow rate $v_f$ of the gelatin solution to the flow rate $v_p$ of the filtrate was calculated to be less than 0.02. When the liquid volume in the container A reached 300 mL, the pressure required for perfusion increased due to the increase in viscosity of the gelatin solution, and exceeded the upper limit of the withstand pressure of the operating device of the module, which was 0.2 MPa, and thus the operation was stopped.

[Comparative Example 5]

The process was the same as in Example 1, except that the outer surface of the ultrafiltration membrane was perfused at a flow rate of 0.5 m/sec. Immediately after the start of operation, a significant decrease in the limit flux occurred. The limit flux at a liquid volume of 200 mL was 0.05 m/day, and the gelatin concentration of the gelatin solution recovered in the container A was 11 mass%. The limit flux at the start of the membrane filtration operation was 2.00 m/day, and the ratio ($\mu_f/\mu_p$) of the viscosity $\mu_f$ of the gelatin solution to the viscosity $\mu_p$ of the filtrate was 3.8, and the ratio ($v_p/v_f$) of the flow rate $v_f$ of the gelatin solution to the flow rate $v_p$ of the filtrate was calculated to be 0.16. The time required for the membrane filtration operation was 125 minutes.

The gelatin concentration of the gelatin solution recovered in the eggplant-shaped flask was 33 mass%, and the boiling point rise was 1°C.

Table 1

| | Ultrafiltration membrane | Structure of membrane module | | | Membrane concentration condition $v_p/v_f$ | |
|---|---|---|---|---|---|---|
| | Rejection rate [%] | Membrane area [m$^2$] | Effective membrane length [m] | Membrane filling rate [%] | At start | At end |
| Example 1 | 45 | 0.02 | 0.3 | 40 | 0.09 | 0.02 |
| Example 2 | 45 | 0.02 | 0.3 | 40 | 0.09 | 0.01 |
| Example 3 | 45 | 9.2 | 1.0 | 40 | 0.11 | 0.04 |
| Example 4 | 45 | 0.005 | 0.3 | 10 | 0.09 | 0.02 |
| Example 5 | 45 | 0.03 | 0.3 | 60 | 0.09 | 0.02 |
| Example 6 | 35 | 0.02 | 0.3 | 40 | 0.09 | 0.02 |

(continued)

| | Ultrafiltration membrane | Structure of membrane module | | | Membrane concentration condition $v_p/v_f$ | |
|---|---|---|---|---|---|---|
| | Rejection rate [%] | Membrane area [m$^2$] | Effective membrane length [m] | Membrane filling rate [%] | At start | At end |
| Comparative Example 1 | - | - | - | - | - | - |
| Comparative Example 2 | 45 | 0.02 | 0.3 | 40 | 0.09 | < 0.02 |
| Comparative Example 3 | 45 | 0.02 | 0.3 | 40 | 0.03 | < 0.02 |
| Comparative Example 4 | 45 | 0.02 | 0.3 | 40 | < 0.02 | - |
| Comparative Example 5 | 45 | 0.02 | 0.3 | 40 | > 0.15 | < 0.02 |

Table 1 (continued)

| | Gelatin concentration [mass%] | | Limit flux [m/day] | Boiling point rise (°C) | Membrane concentration time [min] |
|---|---|---|---|---|---|
| | After membrane concentration step | After thermal concentration step | At end of membrane concentration step | | |
| Example 1 | 11 | 33 | 0.60 | 1 | 25 |
| Example 2 | 15 | 40 | 0.24 | 1 | 35 |
| Example 3 | 11 | 33 | 0.30 | 1 | 25 |
| Example 4 | 11 | 33 | 0.60 | 1 | 100 |
| Example 5 | 11 | 33 | 0.60 | 1 | 17 |
| Example 6 | 11 | 33 | 0.40 | 0 | 100 |
| Comparative Example 1 | - | 33 | - | 7 | - |
| Comparative Example 2 | 31 | - | 0.03 | 1 | 120 |
| Comparative Example 3 | 33 | 9 | 0.03 | 2 | 105 |
| Comparative Example 4 | - | - | - | - | - |
| Comparative Example 5 | 11 | 33 | 0.05 | 1 | 125 |

According to Table 1, in Examples 1 to 6 in which the thermal concentration step was carried out after the membrane concentration step, the limit flux was higher and the boiling point rise was smaller at the end of the membrane concentration step than in the comparative examples.

On the other hand, in Comparative Example 1 in which the membrane concentration step was not carried out, the boiling point rise was large. In Comparative Example 2, in which the thermal concentration step was not carried out, the limit flux at the end of the membrane concentration step was low. In Comparative Example 3 in which the membrane concentration step was carried out after the thermal concentration step, the limit flux was low and the boiling point rise was large at the end of the membrane concentration step. In Comparative Example 4, in which $v_p/v_f$ was less than 0.02 at the start of membrane concentration operation, stable operation below the upper limit of the withstand pressure of the module was difficult. In Comparative Example 5, in which $v_p/v_f$ was more than 0.15 at the start of the membrane concentration operation, the decrease in the limit flux due to membrane clogging was significant, and the time required for the membrane filtration operation was long.

From the above results, it was found that the method for producing gelatin or a concentrated gelatin solution according to one embodiment of the present invention can produce gelatin or a concentrated gelatin solution in an energy-saving manner.

The preferred embodiment of the present invention has been described above, but the present invention is not limited to the embodiment described above, and various modifications and substitutions can be made to the embodiment described above without departing from the scope of the present invention. The present application is based on the Japanese patent application (JP2022-057099A) filed on March 30, 2022, the contents of which are incorporated herein by reference.

INDUSTRIAL APPLICABILITY

According to the production method of the present invention, gelatin or a concentrated gelatin solution can be produced in an energy-saving manner.

REFERENCE SIGNS LIST

1: container
2: feed inlet
3: filtrate outlet
4: feed outlet
5: ultrafiltration membrane
6: feed side space
7: filtrate side space
8: first potting portion
9: second potting portion
10: ultrafiltration membrane module
12: feed tank
13: filtrate tank
14: supply pump
15: thermostatic water bath
16: fine tube
21: concentrated liquid valve
22: filtrate valve
31: concentrated liquid flowmeter
32: filtrate flowmeter
41: feed inlet pressure gauge
42: feed outlet pressure gauge
43: filtrate outlet pressure gauge
45: tube inlet pressure gauge
46: tube outlet pressure gauge
51: feed thermometer

**Claims**

1.  A method for producing gelatin or a concentrated gelatin solution, the method comprising:

    a membrane concentration step in which a gelatin solution is concentrated by an ultrafiltration membrane module comprising an ultrafiltration membrane; and
    a thermal concentration step in which the gelatin solution is further concentrated by heat after the membrane concentration step, wherein
    the membrane concentration step is started such that when a ratio ($\mu_f/\mu_p$) of a viscosity $\mu_f$ of the gelatin solution to a viscosity $\mu_p$ of a filtrate is 1.5 or more, a flow rate ratio ($v_p/v_f$) of a flow rate $v_f$ of the gelatin solution to a flow rate $v_p$ of the filtrate is 0.020 or more and 0.15 or less.

2.  The method for producing gelatin or a concentrated gelatin solution according to claim 1, wherein
    the viscosity $\mu_f$ of the gelatin solution to be concentrated by the membrane concentration step is 2.0 mPa·s or more.

3.  The method for producing gelatin or a concentrated gelatin solution according to claim 1 or 2, wherein
    the membrane concentration step is carried out so that the viscosity $\mu_f$ of the gelatin solution and the flow rate $v_f$ of the gelatin solution satisfy a relation of $v_f < -0.135\mu_f + 3.0$.

4.  The method for producing gelatin or a concentrated gelatin solution according to claim 1 or 2, wherein

in the membrane concentration step, a membrane area per unit volume of the ultrafiltration membrane module is 800 $m^2/m^3$ or more and 3700 $m^2/m^3$ or less.

5. The method for producing gelatin or a concentrated gelatin solution according to claim 1 or 2, wherein

in the membrane concentration step, a ratio ($V_f/A$) of a flow rate $V_f$ of the gelatin solution per one ultrafiltration membrane module to an effective membrane area A per one ultrafiltration membrane module is 0.5 m/h or more and 3.5 m/h or less,
provided that, when a plurality of ultrafiltration membrane modules are arranged in series, all the ultrafiltration membrane modules arranged in series are considered to be one unit.

6. The method for producing gelatin or a concentrated gelatin solution according to claim 1 or 2, wherein

in the membrane concentration step, a ratio ($V_f/V$) of the flow rate $V_f$ of the gelatin solution per one ultrafiltration membrane module to a volume V of one ultrafiltration membrane module is 600/h or more and 4000/h or less,
provided that, when a plurality of ultrafiltration membrane modules are arranged in series, all the ultrafiltration membrane modules arranged in series are considered to be one unit.

7. The method for producing gelatin or a concentrated gelatin solution according to claim 1 or 2, wherein
a blocking rate R of the ultrafiltration membrane for dextran having a weight average molecular weight of 40000 is 40% or more and 80% or less.

8. The method for producing gelatin or a concentrated gelatin solution according to claim 1 or 2, wherein
a surface free energy $\gamma$ of the ultrafiltration membrane is 10 $mJ/m^2$ or more and 40 $mJ/m^2$ or less.

9. The method for producing gelatin or a concentrated gelatin solution according to claim 1 or 2, wherein

a van der Waals component $\gamma_{LW}$ of the surface free energy $\gamma$ of the ultrafiltration membrane is 10 $mJ/m^2$ or more and 40 $mJ/m^2$ or less, and
an electron-donor component $\gamma$- of the surface free energy $\gamma$ of the ultrafiltration membrane is 25 $mJ/m^2$ or more and 40 $mJ/m^2$ or less.

10. The method for producing gelatin or a concentrated gelatin solution according to claim 1 or 2, wherein
a surface potential $\Psi$ of the ultrafiltration membrane is -20 mV or more and -5 mV or less, provided that, the surface potential $\Psi$ is measured at room temperature in a buffer solution of pH 7.

11. The method for producing gelatin or a concentrated gelatin solution according to claim 1 or 2, wherein
the ultrafiltration membrane comprises a thermoplastic resin comprising a polyvinylidene fluoride resin.

12. The method for producing gelatin or a concentrated gelatin solution according to claim 1 or 2, wherein
in a surface of the ultrafiltration membrane that comes into contact with the gelatin solution, a value X obtained by dividing the number of surface pores per unit surface area by an average value of surface pore diameters is 5 pores/$\mu m^2$/nm to 100 pores/$\mu m^2$/nm.

13. The method for producing gelatin or a concentrated gelatin solution according to claim 1 or 2, wherein

the ultrafiltration membrane has elliptical openings in a surface that comes into contact with the gelatin solution,
an average value of a ratio (d1/d2) of a major axis d1 to a minor axis d2 of each of the openings is 1.1 or more and 1.4 or less,
a standard deviation of the ratio (d1/d2) is 0.3 or less, and
an average value $d2_{avc}$ of the minor axis is 5 nm or more and 15 nm or less.

14. The method for producing gelatin or a concentrated gelatin solution according to claim 1 or 2, wherein
in the ultrafiltration membrane module, an effective membrane length in a flowing direction of the gelatin solution is 0.50 m or more and 2.00 m or less.

15. The method for producing gelatin or a concentrated gelatin solution according to claim 1, wherein
the ultrafiltration membrane module is an external-pressure type membrane module comprising a hollow fiber membrane as the ultrafiltration membrane.

16. The method for producing gelatin or a concentrated gelatin solution according to claim 15, wherein a membrane filling rate in the external-pressure type membrane module is 20% or more and 50% or less.

17. The method for producing gelatin or a concentrated gelatin solution according to claim 15 or 16, wherein a load at breaking of the hollow fiber membrane is 500 gf/membrane or more.

18. The method for producing gelatin or a concentrated gelatin solution according to claim 15 or 16, wherein an inner diameter of the hollow fiber membrane is 300 μm or more and 1000 μm or less.

# FIG. 1

FIG. 2

FIG. 3

FIG. 4

## INTERNATIONAL SEARCH REPORT

| International application No. |
|---|
| **PCT/JP2023/013447** |

### A. CLASSIFICATION OF SUBJECT MATTER

*A23J 3/06*(2006.01)i; *B01D 61/14*(2006.01)i; *B01D 61/18*(2006.01)i; *B01D 61/22*(2006.01)i; *B01D 63/02*(2006.01)i; *B01D 69/00*(2006.01)i; *B01D 69/02*(2006.01)i; *C08H 1/00*(2006.01)i

FI:  B01D61/14 500; B01D63/02; B01D61/22; B01D69/02; B01D69/00; A23J3/06; C08H1/00; B01D61/18

According to International Patent Classification (IPC) or to both national classification and IPC

### B. FIELDS SEARCHED

Minimum documentation searched (classification system followed by classification symbols)

A23J3/06; B01D61/14; B01D61/18; B01D61/22; B01D63/02; B01D69/00; B01D69/02; C08H1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 57-209975 A (MITSUBISHI KASEI KOGYO KK) 23 December 1982 (1982-12-23) <br> claims, p. 1, lower right column, line 9 to p. 4, lower right column, line 16, fig. 1-3, 7 | 1-18 |
| A | JP 60-226897 A (NITTO DENKI KOGYO KK) 12 November 1985 (1985-11-12) <br> claims, p. 1, lower right column, line 12 to p. 5, upper right column, line 9, p. 5, lower left column, lines 9-17, fig. 1-8 | 1-18 |
| A | JP 9-121819 A (TERAO, Kimihide) 13 May 1997 (1997-05-13) <br> claims, paragraphs [0007]-[0030] | 1-18 |
| A | CN 110052171 A (SICHUAN HUIYU BIOLOGICAL TECH CO., LTD.) 26 July 2019 (2019-07-26) <br> claims, paragraphs [0005]-[0024] | 1-18 |
| A | CN 1442441 A (INST. OF PHYSICAL AND CHEMICAL TECHNOLOGY, CHINESE ACADEMY OF SCIENCES) 17 September 2003 (2003-09-17) <br> claims, p. 4, line 3 to p. 5, line 30 | 1-18 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2023/013447** |

**C.      DOCUMENTS CONSIDERED TO BE RELEVANT**

| Category* | Citation of document, with indication, where appropriate, of the relevant passages | Relevant to claim No. |
|---|---|---|
| A | CN 111362360 A (SHENZHEN WEIKAI ENVIRONMENTAL PROTECTION TECH CO., LTD.) 03 July 2020 (2020-07-03)<br>claims, paragraphs [0005]-[0020], [0024]-[0076] | 1-18 |
| A | CN 103084066 A (YU, Gou) 08 May 2013 (2013-05-08)<br>claims, paragraphs [0005]-[0036] | 1-18 |
| A | CN 101982222 A (HEFEI FENGYUN MEMBRANE SEPARATION TECHNOLOGY CO., LTD.) 02 March 2011 (2011-03-02)<br>claims, paragraphs [0006]-[0019] | 1-18 |

Form PCT/ISA/210 (second sheet) (January 2015)

INTERNATIONAL SEARCH REPORT
Information on patent family members

International application No.

**PCT/JP2023/013447**

| Patent document cited in search report | | | Publication date (day/month/year) | Patent family member(s) | Publication date (day/month/year) |
|---|---|---|---|---|---|
| JP | 57-209975 | A | 23 December 1982 | (Family: none) | |
| JP | 60-226897 | A | 12 November 1985 | (Family: none) | |
| JP | 9-121819 | A | 13 May 1997 | (Family: none) | |
| CN | 110052171 | A | 26 July 2019 | (Family: none) | |
| CN | 1442441 | A | 17 September 2003 | (Family: none) | |
| CN | 111362360 | A | 03 July 2020 | (Family: none) | |
| CN | 103084066 | A | 08 May 2013 | (Family: none) | |
| CN | 101982222 | A | 02 March 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11140420 A
- JP 2014100110 A
- JP 2021516685 A
- JP 2022057099 A